# EUROPEAN PATENT APPLICATION

(11) **EP 3 667 374 A1**
(43) Date of publication of application: **17.06.2020**
(21) Application number: 18306700.8
(22) Date of filing: 14.12.2018
(51) Int. Cl.: G01W 1/12

(54) **TRANSPORTABLE MEASURING STATION AND METHOD FOR ASSESSING A LOCATION OF A POTENTIAL SOLAR POWER PLANT**

(71) Applicant: Total SA, 92400 Courbevoie (FR)
(72) Inventor: HUDANSKI, Ludovic, 92190 MEUDON (FR)
(74) Representative: Croonenbroek, Thomas Jakob

(57) **Abstract**

The present invention refers to a method for assessing a location of a potential solar power plant using a transportable measuring station (100), said measuring station (100) comprising the following sensors:
- a set of pyranometers (1) configured to measure solar irradiance,
- a temperature sensor (3),
- an anemometer (5),
- a shading sensor (7),
and wireless communication means (23),
the method comprising the following steps:
- a measuring step (103) wherein at least the solar irradiance, the temperature, the wind speed and the shading are measured using the different sensors of the transportable measuring station (100),
- a transmission step (105) wherein the measurements are transmitted via the wireless communication means (23) toward a remote device,
- an analyzation step (107) wherein the potential solar energy production that could be obtained by using photovoltaic modules at the location of the transportable measuring station (100) is assessed based on the transmitted measurements.

## Description

### Background of the invention

The present invention refers to the photovoltaic energy production and in particular a method and an equipment for comparing different locations and optimizing the prediction of the global yield of a solar power plant as a function of the location.

With climate change, global warming and the fossil fuel depletion, many technologies have been developed over the past few years in order to use alternate resources and in particular renewable energy resources.

One of the main technologies refers to the use of photovoltaic modules to convert the solar energy into electricity.

An issue linked to this technology is the choice of the location to set up a solar power plant. Indeed, different parameters are influencing the efficiency of photovoltaic modules. The amount of electricity produced with photovoltaic depends not only on the quantity of solar radiation but also of many other local parameters, for example the temperature. Indeed, the conversion efficiency of the photovoltaic modules tends to decrease with high temperatures. Other local parameters such as the amount of dust and wind may also influence significantly the yield of the solar power plant.

Such data are generally obtained by existing weather stations of a global weather station network or by the use of satellite databases. However, the weather stations may be far away from the location to be assessed, for example several kilometers or several tens of kilometers so that weather conditions may be significantly different. The satellite technique may also have drawbacks such as a limited temporal sampling, a poor accuracy of the measurements and a spatial resolution which does not take into account some local singularities.

Another linked issue is the assessment of energy production of a future solar power plant on a selected location. Indeed, it can be very important for a solar power plant developer to estimate accurately the energy that will be produced by a power plant in order to estimate the cost of a produced amount of electricity. Such estimation is in particular very important in the case of a tender wherein developers have to estimate the global ratio between the cost and the produced energy in order to predict a production yield and to determine an energy production prices as close as possible to the reality ensure its competitiveness in the tender without taking too much risks.

The present invention aims therefore at providing a method and an equipment enabling to take into account the different parameters influencing the solar energy production and to assess accurately a solar production of one or different locations for the establishment of a solar power plant and allowing therefore the selection of the best location and/or the best estimation of the energy production capacity of a selected location.

### Summary of the invention

The present invention refers to a method for assessing a location of a potential solar power plant using a transportable measuring station, said measuring station comprising the following sensors:
- a set of pyranometers configured to measure solar irradiance,
- a temperature sensor,
- an anemometer,
- a shading sensor,
   and wireless communication means,
   the method comprising the following steps:
   - a measuring step wherein at least the solar irradiance, the temperature, the wind speed and the shading are measured using the different sensors of the transportable measuring station,
   - a transmission step wherein the measurements are transmitted via the wireless communication means,
   - an analyzation step wherein the potential solar energy production that could be obtained by using photovoltaic modules at the location of the transportable measuring station is assessed based on the transmitted measurements.

According to another aspect of the present invention, the method comprises a compilation step wherein the measurements achieved during the measuring step are put together before transmission.

According to a further aspect of the present invention, the transmission step is achieved in real-time with the measurement step.

According to an additional aspect of the present invention, the method also comprises before the analyzation step:
- a storing step wherein the transmitted measurements are stored in a database.

According to another aspect of the present invention, the measuring and transmission steps are achieved over a period having a range between a three weeks and twelve months, preferably between three and nine months.

According to a further aspect of the present invention, in case of a period lasting less than twelve months, an extrapolation is achieved to assess the solar energy production over a twelve month period based on already known weather and solar features of the location of the transportable measuring station.

The present invention also refers to a transportable measuring station for the assessment of a potential solar power plant location comprising:
- a pyranometer configured to measure solar irradiance,
- a temperature sensor,
- an anemometer,
- a shading sensor,
- wireless communication means,
- a processing unit configured for retrieving measurements made by the different sensors and for transmitting the measurements toward a remote server via the wireless communication means.

According to another aspect of the present invention, the transportable measuring station also comprises:
- energy recovery means,
- energy storage means for storing the recovered energy,
the combination of the energy recovery means and the energy storage means providing energetic autonomy to the transportable measuring station.

According to a further aspect of the present invention, the energy recovery means comprise at least one of the following devices:
- a photovoltaic module,
- a wind turbine,
- wave energy recovery means.

According to an additional aspect of the present invention, the transportable measuring station also comprises sun tracking means and/or a pyrheliometer combined with the set of pyranometers to determine the solar irradiance.

According to another aspect of the present invention, the transportable measuring station also comprises at least one of the following sensors:
- an hygrometer configured for measuring the relative humidity,
- a barometer,
- rain fall measuring means,
- a sky imaging camera,
- an albedometer,
- an optical soiling sensor unit configured for determining the loss of light transmission due to the presence of dust or soil.

According to a further aspect of the present invention, the optical soiling sensor unit is configured for determining the loss of light transmission due to the presence of dust or soil for two different directions.

### Brief description of the drawings

[Fig.1] is a diagram of a transportable measuring station according to an embodiment of the invention;
[Fig.2] is a flowchart of the different steps of the invention.

### Detailed description of the invention

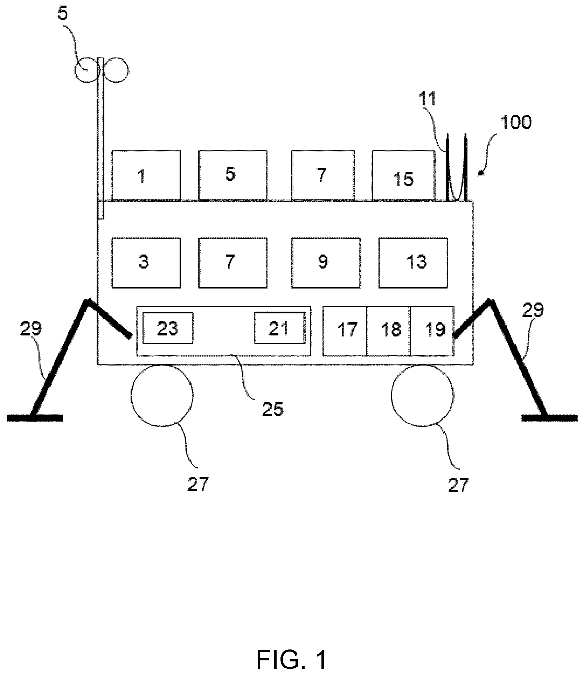

Fig.1 represents a diagram of a transportable measuring station 100 configured to be placed in locations corresponding to potential solar power plant implementations. Such locations are for example selected by the company responsible for the implementation and the management of the solar power plant. Alternatively, the location can be proposed to a tender for the implementation of a solar power plant and needs to be assessed to determine the expected production of the proposed location.

The transportable measuring station 100 comprises a plurality of sensors configured for measuring the parameters influencing the production of the power plant. The transportable measuring station 100 comprises at least some of the following sensors :
- a pyranometer 1 configured for measuring the solar irradiance. It can be a plane of array irradiance or a global horizontal irradiance. The monitoring of the solar irradiance may be realized with a high frequency, for example 1 measure per sec. In general, a set of several pyranometers is used to determine accurately the irradiance, notably the global irradiance. Furthermore, a pyrheliometer can be combined to the pyranometer(s) to measure the direct irradiance.

The transportable measuring station 100 may also comprise sun tracking means 19 which can be combined with other sensors such as the pyranometer(s) 1 to provide an optimal orientation of the pyranometer(s) 1 during the measurements. The sun tracking means 19 comprise another pyranometer or a reference cell capable of measuring the irradiance.

For example a set of pyranometers may comprise a first horizontal pyranometer for the global irradiance, a second pyranometer combined with a shading sensor to measure the diffuse component of the irradiance and a pyrheliometer to measure the direct component of the irradiance. The second pyranometer and the pyrheliometer are coupled to sun tracking means 19. However, other configuration comprising a set of pyranometers may also be used.
- a temperature sensor 3 for measuring the ambient temperature such as a thermocouple, a negative or positive temperature coefficient thermistor (NTC and PTC), a semi-conductor based sensor or a resistance temperature detector (RTD). As the yield of the photovoltaic module depends on the temperature, it is important to measure the temperature to assess accurately the energy production that could be obtained. The influence of the temperature on the photovoltaic module production yield can be determined experimentally if not already known.
- an anemometer 5 for measuring the wind speed. Indeed, the wind influences the moves of elements which could prevent sunshine from reaching the photovoltaic modules such as clouds or dust or soiling. The wind direction may also be determined by a dedicated device.
- a shading sensor 7 for determining the presence of elements producing shades on the photovoltaic modules. The elements may be moving elements such as birds, airplanes or clouds or fixed elements such as buildings or trees. Near and far shading may be measured independently. A sky imaging camera 18 may also be used to determine the typical cloud coverage.
- a hygrometer 9 configured for measuring the relative humidity. Indeed, the presence of dew or vapor may reduce the amount of sunshine reaching the photovoltaic modules. Furthermore, the humidity may influence the electronic part of the photovoltaic modules.
- rain fall measuring means 11 to measure the amount of rain that is falling over the time. As rain implies a limited sunshine, the high amount of rain may lead to a poor solar energy production. Furthermore, heavy rainfalls or hail may lead to damages on the photovoltaic modules. On the other side, rain may also contribute to the self-cleaning of the photovoltaic modules.
- a barometer 13 for measuring the ambient pressure.
- an albedometer 15 for measuring the amount of light that is reverberated by the ground in order to assess the potential efficiency of bifacial photovoltaic modules capable of converting the reverberated light.
- an optical soiling sensor unit 17 configured for measuring the loss of light transmission due to dust or soil reaching the transportable measuring station 100. Such optical soiling sensor may refer to a DustIQ sensor from the Kipp&Zonen company. The optical soiling sensor unit 17 may be configured for determining the loss of light transmission in two different directions for the assessment of the loss of energy production due to soil or dust in the case of bifacial photovoltaic modules.

The transportable measuring station 100 may also comprise a storing unit 21 configured for storing the measured parameter data. The storing unit 21 is for example an electronic memory providing memory space for a database comprising the data.

The transportable measuring station 100 also comprises wireless communication means 23 configured for transmitting or broadcasting the measured parameter data toward a remote device such as a remote server. These wireless communication means 23 correspond for example to an electronic chip providing a third generation (3G) or fourth generation (4G)/long-term evolution (LTE) connection to the Internet or any other wireless communication means adapted for transmitting measured parameter data.

The transportable measuring station 100 also comprises a processing unit 25 configured for managing the different sensors 1-17 or sun tracking means 19, retrieving the measurements, possibly storing and/or compiling the measured parameter data and for transmitting the measured parameter data toward a remote server via the wireless communication means 23. The processing unit may also be configured for processing the measured parameter data. For example an average of the measurements may be achieved over a given period.

The processing unit 25 may be provided through the use of a dedicated hardware as well as hardware capable of executing software in association with appropriate software dedicated to the signal processing. When provided by a processor, the digital processing means may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardwares, conventional and/or custom, may also be included.

The transportable measuring station may be a modular station so that for each mission only the required sensors may be installed on the station. The different sensors or set of sensors may be gathered in modules that can be locked to the station and plugged to a communication bus and a power supply, for example by a dedicated connector.

The transportable measuring station 100 may also comprises transportation means such as wheels 27 or caterpillar to ease transportation on earth or floating members such as water wings to ease water transportation or propeller to allow air or water transportation. Stabilization members 29 may also be used to ensure stability of the transportable measuring station when the transportable measuring station is located at the desired place for the measurements. Stabilization members 29 may comprise adjustable legs and feet. Stabilization members 29 may also be configured to set the transportable measuring station 100 horizontal.

Furthermore, the transportable measuring station 100 may comprise autonomous transportation means. For example, an electric engine may be coupled to the wheels or to the propeller and a global positioning system (GPS) may be implemented on the transportable measuring station. Additional cameras or detection sensors such as ultrasonic detectors may also be implemented on the transportable measuring station 100 to avoid obstacles. Alternatively, the transportable measuring station 100 may also comprise driving means enabling a remote control of the transportable measuring station 100 by a remote operator.

In the case of autonomous transportation means, the displacement of the station may be achieved between two selected locations corresponding to two possible power plant locations or within a selected location to determine the solar production in different places of the selected location. The station may move across different places according to a periodic loop. Average measurements over the different places may be achieved to assess the potential production of the selected location gathering the different places.

Concerning the energy supply, the transportable measuring station 100 may comprise plugging means to be coupled to an electrical grid but may also comprise energy storage such as a battery and energy recovery means such as a photovoltaic module or a wind turbine or wave energy recovering means enabling supplying of the sensors and charging of the battery.

Thus, the transportable measuring station 100 provides a solution to acquire all the relevant measurements to estimate the solar power that could be produced at a selected location and enables obtaining accurate and reliable measurements. Such accurate measurement may allow a comparison between two potential locations or an accurate estimation of the energy production of a selected location with a reduced risk of measurement error with respect to available solutions.

The present invention also refers to a method for assessing a location of a potential solar power plant and in particular assessing the amount of solar power that could be produced at the selected location.

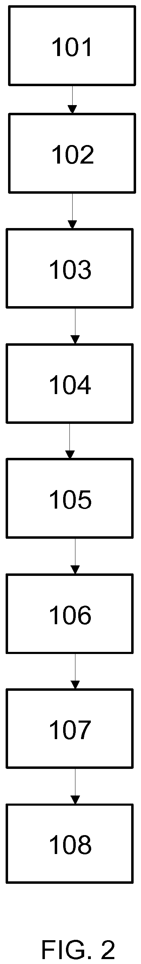

Fig.2 is a flowchart of the different steps of the method.

The first step 101 is an initial step corresponding to the transportation of the transportable measuring station 100 at the desired location. Such transportation may be achieved by an operator directly or by remote control or autonomously by the transportable measuring station itself using autonomous transportation means or a combination of these transportation possibilities. Alternatively, an autonomous or remoter control vehicle such as a drone may be used to move the transportable measuring station 100. In such case, the transportable measuring station 100 may comprise linking means configured for cooperating with linking means of the vehicle to enable the transportation of the transportable measuring station 100.

The second step 102 which is an optional step refers to the stabilization of the transportable measuring station 100 at the desired location for the measurements. This step may comprise the determination of a flat and stable ground within the selected site and/or the use of stabilization means 14 to ensure the stability of the transportable measuring station 100. Such step may be important as the accuracy of some measurements may depend on the stability and the horizontality of the transportable measuring station 100.

The third step 103 refers to the measuring step. The measurements may be done at regular predetermined time intervals, for example every second. The measuring frequency may be different from one sensor to another, for example some sensors may have a measuring frequency of one measure per second while others may have a frequency of one measure per minute.

The fourth step 104 is an optional step corresponding to the compilation of the measurement parameter data (data obtained from the different sensors and corresponding to the measured value of the sensed parameter). The different measurement parameter data are put together, for example in a common file. The compilation frequency may correspond to the highest measuring frequency. Alternatively, the compilation frequency may be lower than the highest measuring frequency. In such case, the measurement parameter data may be stored in a database until the next compilation. The compiled data may also be stored before transmission depending on the transmission frequency. Alternatively, measurement may also be processed, for example basic processing such as averaging over a given period before being transmitted.

The fifth step 105 refers to the transmission, via the wireless transmission means, of the measurement parameter data to a remote device such as a remote server. The measurement parameter data may be transmitted in real-time as soon as the measurements are achieved. Alternatively, a transmission frequency may be defined and measurements may be stored between two transmissions.

The sixth step 106 refers to the storage of the transmitted measurement parameter data in a database, for example in a memory of the remote device or server. The measurement parameter data may be added in the database to the previous stored measurement parameter data over time in order to provide a full set of measurement parameter data over a given time period in the database.

The steps 103 to 106 are achieved continuously during a predetermined period. The predetermined period may correspond to a range from three weeks to twelve months, preferably between three months and nine months. In the case of a period shorter than twelve months, extrapolations over the rest of the year may be achieved based on known weather conditions, for example based on available measurements made in the same region in order to obtain an assessment of the yearly solar power production.

The seventh step 107 refers to the analysis of the stored measurement parameter data and the assessment of the location where the measurements have been performed. The analysis and the assessment may refer to the estimation of the solar power production that could be obtained by using a selected type and number of photovoltaic modules at the location of the measurements.

As disclosed previously, the use of in-site measurements corresponding to most of the influence parameters over the solar power production enables obtaining an accurate assessment of the power that can be produced. Such accurate assessment enables estimating the cost to produce a predetermined amount of energy so that the cost of the produced energy may be estimated accurately. It also enables comparing different locations to determine the location providing the highest solar power production or having the lowest energy production cost. Furthermore, the measuring of the albedo allows estimating a solar power production based on bi-facial photovoltaic modules.

## Claims

1. Method for assessing a location of a potential solar power plant using a transportable measuring station (100), said measuring station (100) comprising the following sensors:
- a set of pyranometers (1) configured to measure solar irradiance,
- a temperature sensor (3),
- an anemometer (5),
- a shading sensor (7),
and wireless communication means (23),
the method comprising the following steps:
- a measuring step (103) wherein at least the solar irradiance, the temperature, the wind speed and the shading are measured using the different sensors of the transportable measuring station (100),
- a transmission step (105) wherein the measurements are transmitted via the wireless communication means (23) toward a remote device,
- an analyzation step (107) wherein the potential solar energy production that could be obtained by using photovoltaic modules at the location of the transportable measuring station (100) is assessed based on the transmitted measurements.

2. Method in accordance with claim 1 wherein it also comprises a compilation step (104) wherein the measurements achieved during the measuring step are put together before transmission.

3. Method in accordance with one of the previous claims wherein the transmission step (105) is achieved in real-time with the measurement step.

4. Method in accordance with one of the previous claims it also comprises before the analyzation step (107):
- a storing step (106) wherein the transmitted measurements are stored in a database.

5. Method in accordance with one of the previous claims wherein the measuring (103) and transmission (105) steps are achieved over a period having a range between a three weeks and twelve months, preferably between three and nine months.

6. Method in accordance with claim 5 wherein, in case of a period lasting less than twelve months, an extrapolation is achieved to assess the solar energy production over a twelve month period based on already known weather and solar features of the location of the transportable measuring station (100).

7. Transportable measuring station (100) for the assessment of a potential solar power plant location comprising:
- a set of pyranometers (1) configured to measure solar irradiance,
- a temperature sensor (3),
- an anemometer (5),
- a shading sensor (7),
- wireless communication means (23),
- a processing unit (25) configured for retrieving measurements made by the different sensors and for transmitting the measurements toward a remote device via the wireless communication means (23).

8. Transportable measuring station (100) in accordance with claim 7 wherein it also comprises:
- energy recovery means,
- energy storage means for storing the recovered energy,
the combination of the energy recovery means and the energy storage means providing energetic autonomy to the transportable measuring station.

9. Transportable measuring station (100) in accordance with claim 8 wherein the energy recovery means comprise at least one of the following devices:
- a photovoltaic module,
- a wind turbine,
- wave energy recovery means.

10. Transportable measuring station (100) in accordance with of the claims 7 to 9 wherein it also comprises sun tracking means and/or a pyrheliometer combined with the set of pyranometers (1) to determine the solar irradiance.

11. Transportable measuring station (100) in accordance with one of the claims 7 to 10 wherein it also comprises at least one of the following sensors:
- a hygrometer(9) configured for measuring the relative humidity,
- a barometer (13),
- rain fall measuring means (11),
- a sky imaging camera (18),
- an albedometer (15),
- an optical soiling sensor unit (17) configured for determining the loss of light transmission due to the presence of dust or soil.

12. Transportable measuring station (100) in accordance with claim 11 wherein the optical soiling sensor unit (17) is configured for determining the loss of light transmission due to the presence of dust or soil for two different directions.
